# EUROPÄISCHE PATENTSCHRIFT

(11) **EP 1 642 039 B1**
(45) Veröffentlichungstag und Bekanntmachung des Hinweises auf die Patenterteilung: **29.11.2006**
(21) Anmeldenummer: 04738719.6
(22) Anmeldetag: 18.06.2004
(51) Int. Cl.: F16D 48/06

(54) **VERFAHREN UND SYSTEM ZUR BESTIMMUNG DES KUPPLUNGSPUNKTES EINER MITTELS EINER STELLVORRICHTUNG BETÄTIGBAREN KUPPLUNG**
METHOD AND SYSTEM FOR DETERMINING THE POINT OF ENGAGEMENT OF A CLUTCH ACTUATED BY MEANS OF A POSITIONING DEVICE
PROCEDE ET SYSTEME PERMETTANT DE DETERMINER LE POINT D'EMBRAYAGE D'UN EMBRAYAGE ACTIONNABLE A L'AIDE D'UN DISPOSITIF DE REGLAGE

(30) Priorität: 25.06.2003 DE 10328712
(43) Veröffentlichungstag der Anmeldung: 05.04.2006
(73) Patentinhaber: ROBERT BOSCH GMBH, 70442 Stuttgart (DE)
(72) Erfinder: KARRELMEYER, Roland, 74321 Bietigheim-Bissingen (DE); WOLFGARTEN, Sven, 77855 Oberachern (DE); KNAUS, Jean-Sebastian, F-67410 Drusenheim (FR)
(86) Internationale Anmeldenummer: PCT/DE2004/001269
(87) Internationale Veröffentlichungsnummer: WO 2005/005852

(56) Entgegenhaltungen:
- WO-A-02/18814
- DE-A- 4 433 825
- DE-A- 10 159 267

## Beschreibung

### Stand der Technik

Die Erfindung betrifft ein Verfahren und ein System zur Bestimmung des Kupplungspunktes einer mittels einer Stellvorrichtung betätigbaren Kupplung mit den Merkmalen des Oberbegriffs des unabhängigen Anspruchs 1 bzw. des unabhangigen Anspruchs 7.

Ein solches Verfahren/System ist bekannt aus DE-A-4 433 825.

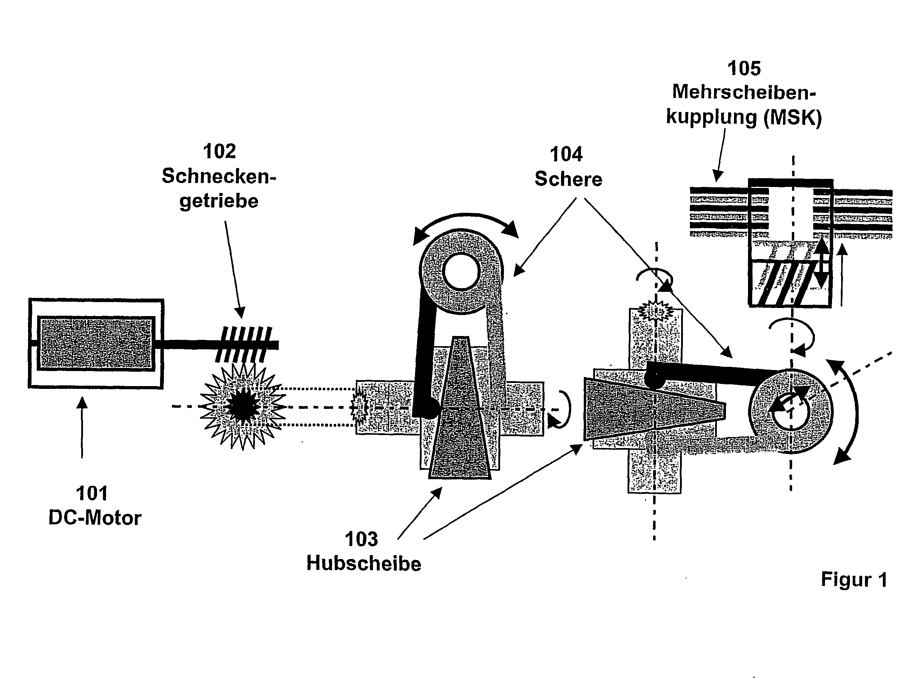

Eine effiziente Fahrdynamik ist bei Fahrzeugen mit Allradantrieb durch eine gezielt dosierbare Aufteilung der Antriebsleistung auf Vorder- und Hinterachse erreichbar. Für die Leistungsaufteilung wird als Stellglied ein Verteilergetriebe (VG) eingesetzt. Kernstück dieses Verteilergetriebes ist eine Mehrscheibenkupplung (MSK), die in Abhängigkeit von der auf ihre Lammellen aufgeprägten Andruckkraft eine Drehmomentenübertragung auf die Abtriebseite des Fahrzeuges realisiert. Die mechanische Konstruktion des Verteilergetriebes ermöglicht eine im Rahmen der Spezifikation geforderte Dosiergenauigkeit allein durch das Aufprägen einer Kraft an der Stellmechanik. Diese Stellkraft wird beispielsweise mittels einer Hubscheibe und einer Scherenmechanik im allgemeinen von einem Getriebemotor (GM) beziehungsweise Stellmotor, im speziellen von einem Gleichstrommotor mit Schneckengetriebe, erzeugt. Figur 1 zeigt die Wirkkette des Verteilergetriebes mit seinen Komponenten, (101) DC-Motor, (102) Schneckengetriebe, (103) Hubscheibe, (104) Schere, (105) Mehrscheibenküpplüng.

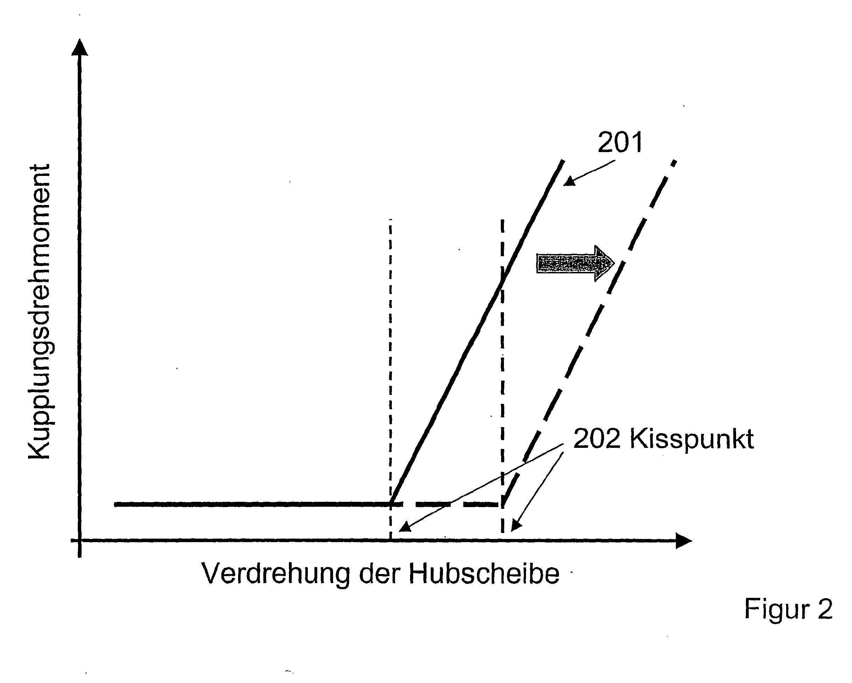

Im Ansteuerkonzept des Getriebemotors wird aus Kostengründen häufig auf Kraft- bzw. Drehmomentensensorik verzichtet. Statt dessen wird die Stellcharakteristik des Verteilergetriebes in Form einer Drehmoment-Stellweg-Kennlinie (201) im Steuergerät (SG) abgelegt (Figur 2), womit der Stelleingriff auf eine Positionierung der Hubscheibe, also auf eine Positionsregelung des Getriebemotores zurückgeführt wird. Zentraler Punkt der Kennlinie ist der Kupplungspunkt (202), auch Kisspunkt genannt. Das ist der Punkt, wo die Mehrscheibenkupplung beginnt ein Drehmoment zu übertragen. Das betriebsdauerbedingte Setzen der Mehrscheibenkupplung bewirkt eine Winkelverschiebung der im Steuergerät abgelegten Kennlinie.

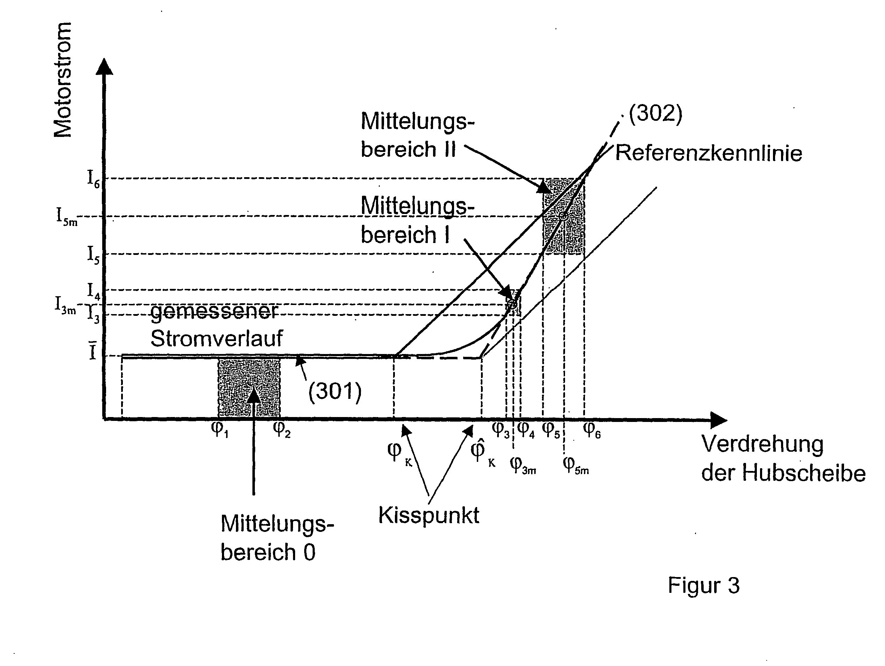

Es kann eine Kalibrierungsprozedur eingesetzt werden, um die Verschiebung des Kupplungspunktes zu detektieren. Hierbei wird der drehzahlgeregelte Getriebemotor als Sensor verwendet, um den Kupplungspunkt zu rekonstruieren. Dabei wird die Hubscheibe mit konstanter Drehzahl vom Stellmotor gegen das durch die Kupplung erzeugte Stelllastmoment verdreht. Falls dabei der Motorstrom messtechnisch aufgenommen wird (Figur 3) kann an drei charakteristischen Winkelpositionen der Hubscheibe der Motorstrom gemittelt werden. Mit den drei Strom/Winkel-Punkten können dann zwei Geraden (301), (302) konstruiert werden, deren Schnittpunkt den Kupplungspunkt wiedergeben würde. Gerade (301) würde dabei als horizontal vorausgesetzt.

Der Motorstrom repräsentiert jedoch nur bei konstantem und genau bekanntem Getriebewirkungsgrad das Stellmoment. Bei den üblicherweise verwandten Stellmotoren und Stellmechanismen variiert der Wirkungsgrad nicht nur in Abhängigkeit vom Einzelstück und der Lebensdauer, sondern beispielsweise auch in Abhängigkeit des Schneckenradwinkels (welcher Zahn des Schneckenrades im Eingriff ist). Ein über der Schneckenradposition variabler Wirkungsgrad führt bei einem drehzahlgeregelten Betrieb zu einer Stromanregung, also zu einer lokalen Verzerrung der Stromkennlinie, Figur 3. Liegt eine solche Verzerrung im Bereich der Mittelungspunkte, so kommt es zu einer fehlerhaften Bestimmung des Kupplungspunktes.

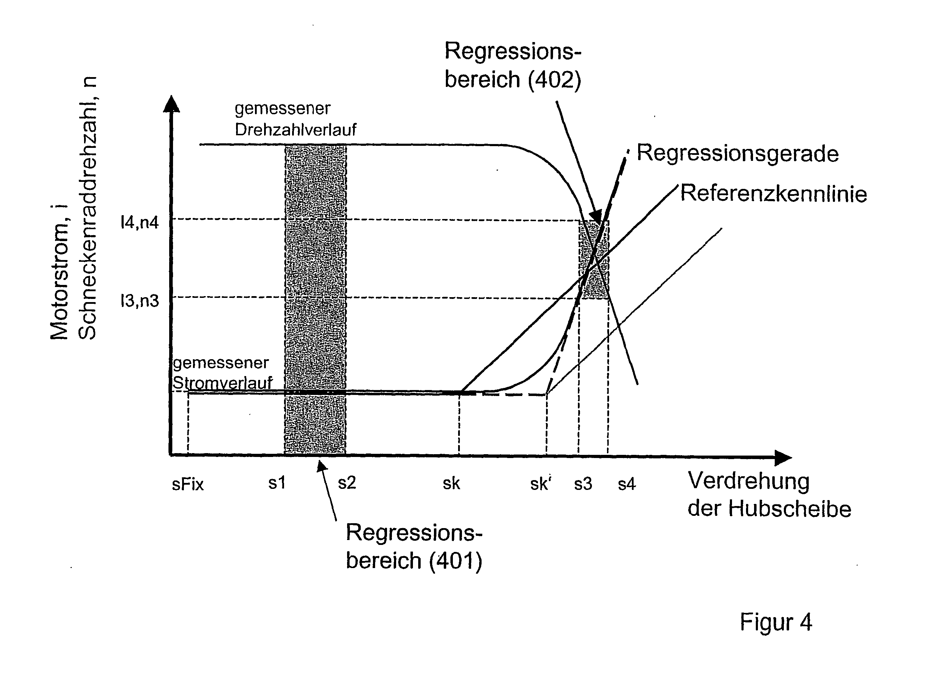

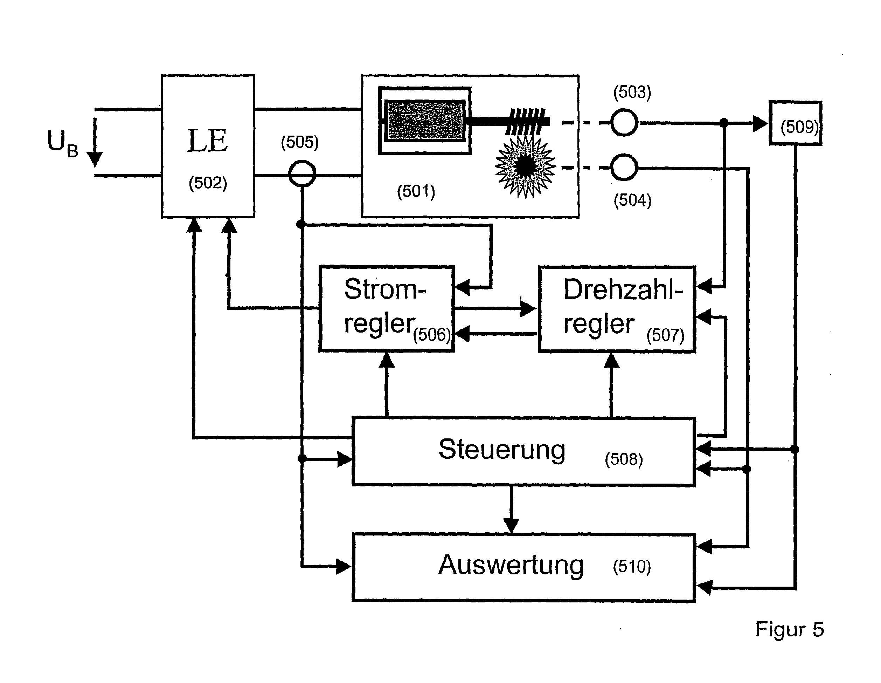

Daher kommt es auf eine speziellen Ansteuerung des Stellmotors und der Auswertung der Systemgrößen Motorstrom und Schneckenrad-Drehzahl an. Der Stellmotor wird während der Kalibrierung über eine kaskadierte Strom/Drehzahlreglereinheit angesteuert und die Systemgrößen Motorstrom, Motordrehzahl (Schneckenraddrehzahl) und Drehwinkelstellung (Schneckenradwinkel) aufgenommen. Die aktive Drehzahlregelung bewirkt, das der Stellmotor die Hubscheibe bis zu einem Schneckenrad Winkel s1, der im Leerweg der Kupplungsstellmechanik liegt, mit konstanter Drehzahl rotiert. Ab s1 werden die Reglerzustände eingefroren, womit der Stellmotor spannungsgesteuert gegen das zunehmende Lastmoment des Kupplungsstellers die Hubscheibe bis zum Stillstand verdreht. Damit sind die erhaltenen Signalverläufe von Motorstrom und Schneckenraddrehzahl = Hubscheibendrehzahl, Figur 4, vom Einfluss der Regler und somit von einer hierdurch als Störung wirkenden Anregung befreit. Es ergeben sich zwei signalverläufe, die zur Bestimmung des Kupplungspunktes verwendet werden können. Die Anwendung der linearen Regressionsmethode bezüglich der Intervalle (401) und (402) auf Strom- und Drehzahlverlauf angewandt, zeichnet sich durch eine höherer Robustheit gegenüber lokalen Getriebewirkungsgradschwankungen aus, als es bei der punktuellen Auswertung lediglich des Stromverlaufes der Fall ist.

### Aufbau

Der Gleichstromgetriebemotor (101), beziehungsweise der Stellmotor wird über eine H-Brücke (502) angesteuert. An dem Stellmotor sind zwei Sensoren (503) zur Motordrehzahlerfassung und (504) zur Erfassung der Schneckenradposition angebracht. Ein weiterer Sensor (505) dient zur Strommessung. Der Stromregler (506) erzeugt aus dem gemessenen Strom vom Stromsensor (505) und der Sollstromvorgabe, das ist die Ausgangsgröße des Drehzahlreglers (507), eine Steuerspannung, die als Eingangsgröße der H-Brücke (502) dient. Der Stromregler (506) ist vorzugsweise als PI-Regler mit Anti-Reset-Windup-Funktion und der Möglichkeit, abhängig von einer Steuergröße die Reglerausgangsgröße und die inneren Reglerzustände einzufrieren, ausgeführt. Der Drehzahlregler (507) erhält seine Eingangsgröße, die gemessene Motordrehzahl, vom Drehzahlsensor (503) und den Motordrehzahlsollwert von der Steuerung (508). Der Drehzahlregler (507) ist vorzugsweise als PI-Regler mit erweiterter, den Zustand des Stromreglers berücksichtigenden Anti-Reset-Windup-Funktion und ebenfalls der Möglichkeit, abhängig von einer Steuergröße die Reglerausgangsgröße und die inneren Reglerzustände einzufrieren, ausgeführt. Die Steuerung (508) steuert den gesamten Kalibrierungsprozess. Die hierfür notwendigen Signalgrößen Schneckenradwinkel (504), Schneckenraddrehzahl (509) und Motorstrom (505) werden von den entsprechenden Sensoreinheiten bzw. Konvertierungseinheiten (509), die Schneckenraddrehzahl oder Hubscheibendrehzahl kann als abgeleitete Größe mittels der bekannten Getriebeübersetzung des Schneckenradgetriebes aus der Motordrehzahl des Stellmotors berechnet werden, zur Verfügung gestellt. In der Auswertungseinheit (510) wird von der Steuereinheit konfiguriert und aktiviert die Regressionsanalyse der Signalverläufe Motorstrom und Schneckenraddrehzahl über dem Schneckenradwinkel durchgeführt.

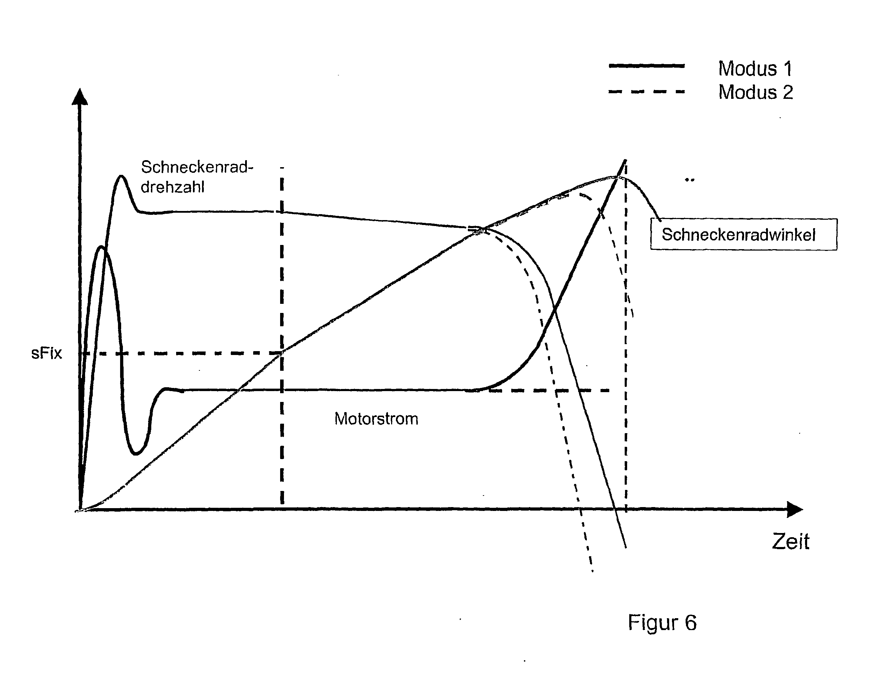

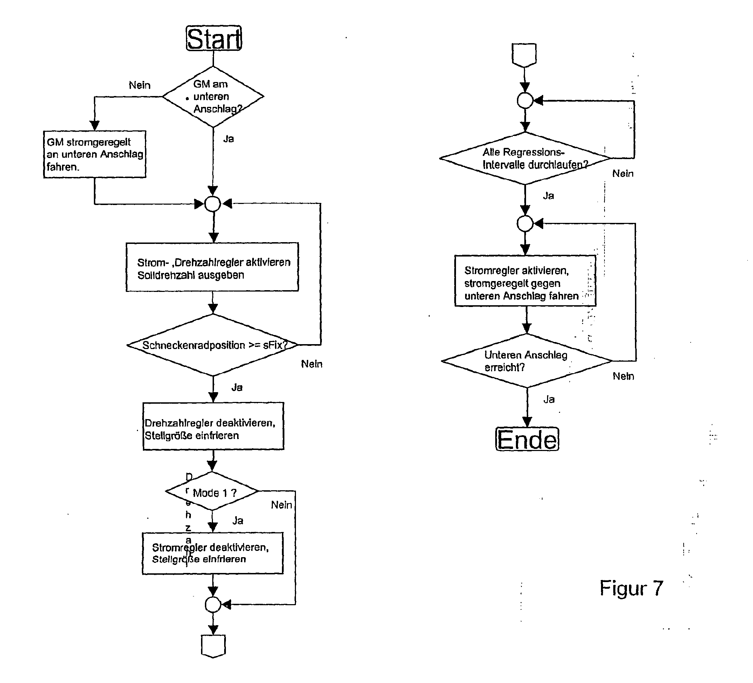

Die Gesamtfunktion teilt sich in die Funktionseinheiten Steuerung und Auswertung bzw. Analyse auf. Die Steuerung gibt die Motorsolldrehzahl an den Drehzahlregler aus und aktiviert gleichzeitig die Funktion des Drehzahl- und Stromreglers. Es stellen.sich die in Figur 6 dargestellten Signalzeitverläufe ein. Der drehzahlgeregelte Zustand bleibt aktiviert bis das Schneckenrad die Position sFix erreicht hat. Danach wird von der Steuerung in Abhängigkeit des Analysemodus die Regler veranlasst, ihre Stellgrößen einzufrieren. Hier gibt es zwei Modi. Bei Modus 1 wird die Stellgröße des Stromreglers eingefroren (konstant geschaltet) und alle Regler-Integralanteile zurückgesetzt. Hierbei wird die Analyse spannungskonstant durchgeführt. Bei Modus 2 bleibt der Stromregler aktiv, nur der Drehzahlregler wird von der Steuerung veranlasst, seine Stellgröße einzufrieren. Hierbei wird die Analyse stromkonstant durchgeführt. Nach Durchlaufen aller Regressionsintervalle wird der Stromregler wieder aktiviert (Modus 1) und von der Steuerung ein Stromsollwert ausgegeben, mit dem der GM wieder in seine Ausgangsposition zurück gefahren wird. Damit ist ein Kalibrierprozess beendet. Pro Kalibrierung kann nur ein Modus aktiv sein, daher können zwei Kalibrierungsläufe (Modus 1, Modus 2) nacheinander durchgeführt werden. Die Kalibrierläufe werden zweckmäßigerweise beim Starten des Verbrennungsmotors des Kraftfahrzeuges oder bei stehendem Fahrzeug im ausgekuppelten Zustand durchgeführt. Figur 7 zeigt einen Signalflussplan der Ansteuerung.

### Auswertung

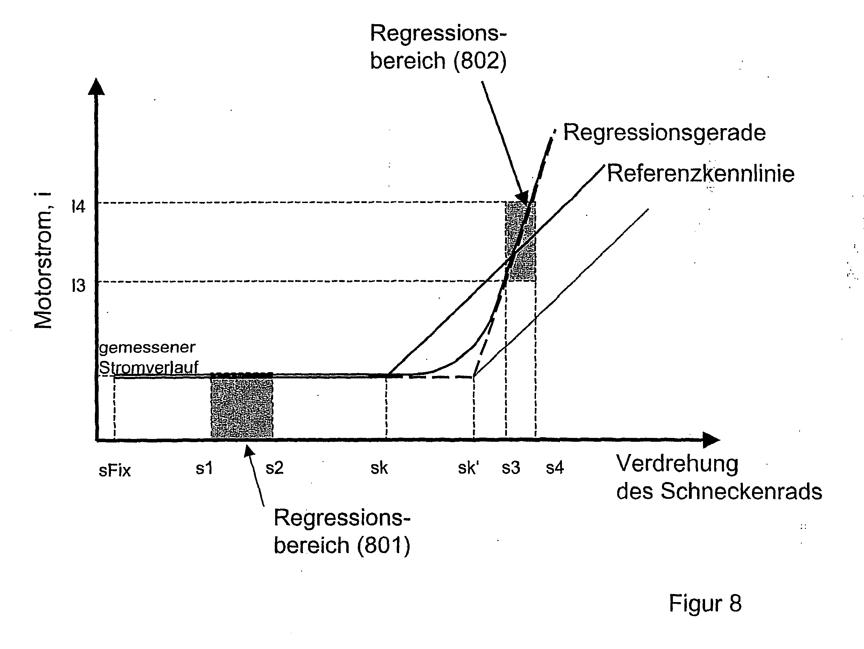

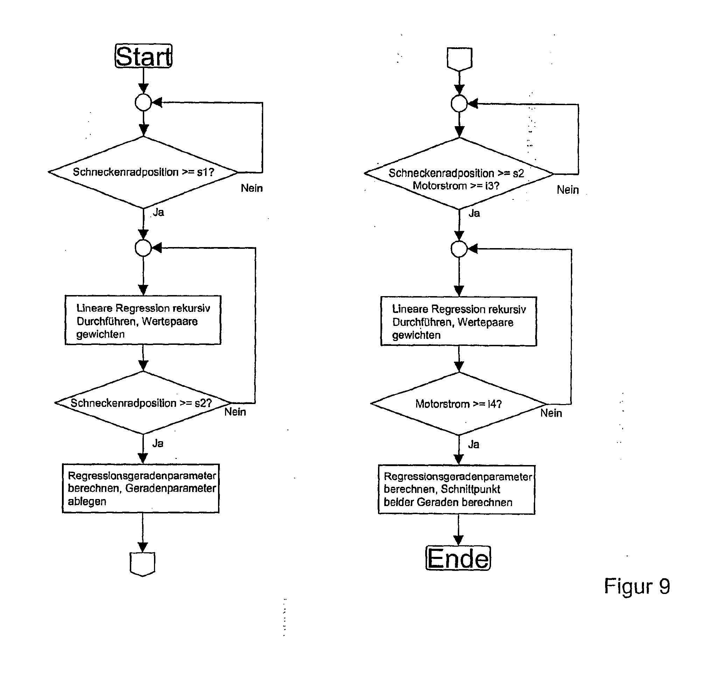

In der Auswertung werden abhängig vom in der Steuerung gewählten Modus pro Signalverlauf zwei Regressionsanalysen durchgeführt. Im Modus 1 wird dieses auf die Signalverläufe Schneckenraddrehzahl über Schneckenradposition und gegebenenfalls zusätzlich Motorstrom über Schneckenradposition angewendet. Im Modus 2 ist diese Anwendung aufgrund der konstanten Stromregelung nur auf den Schneckenraddrehzahlverlauf über der Schneckenradposition sinnvoll. Da das Verfahren im Prinzip für die beiden Verläufe identisch ist, soll es hier beispielhaft nur für den Motorstrom erläutert werden. Der von der Steuerung vorgegebene typische Signalverlauf des Motorstroms ist in Figur 8 angegeben. Im ersten Regressionsbereich (801) wird eine lineare Regression mittels abgetasteter Wertepaare (s.I) rekursiv durchgeführt. Die sich ergebene Regressionsgerade wird durch die zwei Parameter Geradensteigung und Ordinatenabschnitt abgelegt. Im weiteren Verlauf des gesteuerten Kalibrieringsprozesses wird der Regressionsbereich (802) durchlaufen. Innerhalb dieses Bereiches wird erneut eine lineare Regression durchgeführt und die hierbei erhaltene Regressionsgerade wiederum als Parameterpaar Geradensteigung und Ordinatenabschnitt abgelegt. Nachdem alle Regressionsbereiche durchlaufen wurden, wird der Schnittpunkt der beiden Regressionsgeraden berechnet und somit der Kisspunkt bestimmt. Im allgemeinen ist die Steigung der Gerade im Regressionsbereich (802) annähernd bekannt, da sich die Kupplungscharakteristik in dieser Richtung kaum verändert somit auch aus Vorgängeranalysen vorliegt. Hiermit kann eine Filterfunktion realisiert werden, die den Vertrauensbereich der abgetasteten Signalwerte bewertet. Innerhalb der Regressionsbereiche (801), (802) werden lokale Regressionsbereiche gebildet, die eine Teilmenge der ursprünglichen Bereiche sind und deren obere Grenze das neu abgetastete Wertepaar bildet. Es werden entsprechend lokale Regressionsgerade gebildet. Weicht deren Steigung von der erwarteten Steigung ab, so wird das zuletzt abgetastete Wertepaar schwächer in der Regressionsanalyse gewichtet oder sogar verworfen. Der Signalflussplan der Auswertung ist in Figur 9 angegeben.

Zusammenfassend kann gesagt werden, dass zur Bestimmung des Kupplungspunktes ein Kalibrierungsprozess durchgeführt wird. Es ist ein kaskadierter Drehzahl- Stromregler im Einsatz.
Der Stellmotor GM durchläuft teils drehzahlgeregelt, teils spannungsgesteuert bzw. stromgesteuert den gesamten Stellbereich. Der Durchlauf wird drehzahlgeregelt gestartet. Ab einer vorgegebenen Schneckenradposition werden die Reglerstellgrößen eingefroren (Modus 1: Stromregler deaktiviert, Modus 2 Stromregler aktiv, Drehzahlregler deaktiviert).
Es werden die Signalverläufe Modus 1: Strom als Funktion der Schneckenradposition und Schneckenraddrehzahl als Funktion der Schneckenradposition , Modus 2 nur Schneckenraddrehzahl als Funktion der Schneckenradposition aufgenommen.
Es existiert ein fest vorgegebener Regressionsbereich innerhalb des Stellerleerweges. Hier werden die Signalverläufe einer linearen Regression unterzogen. Die Regressionsgeraden für Drehzahl und Strom werden rekursiv bestimmt.
Es existiert ein zweiter Regressionsbereich jeweils abhängig von Schneckenraddrehzahl bzw. Motorstrom.
Hier werden erneut die Signalverläufe einer linearen Regression unterzogen.
Die lokalen Steigungen werden innerhalb kleinerer Teilintervalle deren Obergrenze das aktuell abgetastete Datenpaar ist, durch lineare Regression bestimmt. Der Vergleich der lokalen Steigung mit der zur erwarteten Steigung, z. B. aus Vorgängerkalibrierungen, bestimmt den Gewichtungsfaktor mit der die neuen Wertepaare in die Hauptregression eingehen.
Nach durchlaufen der zweiten Regressionsbereiche wird hierfür die Regressionsgerade berechnet.
Es wird der Schnittpunkt der beiden Regressionsgeraden pro Signalverlauf (Modus abhängig) berechnet.
Der Kupplungspunkt (Kisspunkt) ist der Schnittpunkt der zwei Regressionsgeraden.

## Patentansprüche

1. Verfahren zur Bestimmung des Kupplungspunktes einer mittels einer Stellvorrichtung betätigbaren Kupplung (MSK), insbesondere einer in einem Verteilergetriebe eines Kraftfahrzeuges mit Allradantrieb angeordneten Kupplung, welche Stellvorrichtung einen mittels einer Steuervorrichtung (508) elektrisch antreibbaren Stellmotor (GM) aufweist, der ausgangsseitig ein Motordrehmoment und eine Motordrehzahl bereitstellt und in Wirkverbindung mit einem die Kupplung (MSK) betätigenden Stellmechanismus (102,103,104) steht, wobei die Drehwinkelstellung an der Motorausgangseite oder eine daraus abgeleitete Größe erfasst wird, **dadurch gekennzeichnet, dass** zur Bestimmung des Kupplungspunktes der Stellmotor (GM) von der Steuervorrichtung (508) willkürlich derart betätigt wird, dass die Kupplung (MSK) eingerückt wird und dass bei Erreichen einer vorgebbaren Drehwinkelstellung (s1) des Stellmotors oder der daraus abgeleiteten Größe
- in einem ersten Betriebsmodus der Stellmotor (GM) von der Steuervorrichtung mit einer konstanten Spannung beaufschlagt wird und gleichzeitig die Motordrehzahl in Abhängigkeit von der Drehwinkelstellung und insbesondere zusätzlich der Motorstrom in Abhängigkeit von der Drehwinkelstellung erfasst wird
- und/oder in einem zweiten Betriebsmodus der Stellmotor (GM) von der Steuervorrichtung mit einem konstanten Strom beaufschlagt wird und die Motordrehzahl in Abhängigkeit von der Drehwinkelstellung erfasst wird,
und dass aus den erfassten, von der Drehwinkelstellung abhängigen Werten der Motordrehzahl und insbesondere zusätzlich aus den erfassten, von der Drehwinkelstellung abhängigen Werten des Motorstromes der Kupplungspunkt ermittelt wird.

2. Verfahren nach Anspruch 1, **dadurch gekennzeichnet, dass** bis zum Erreichen der vorgebbaren Drehwinkelstellung (s1) des Stellmotors (GM) oder der daraus abgeleiteten Größe der Stellmotor drehzahlgeregelt angesteuert wird.

3. Verfahren nach Anspruch 1 oder 2, **dadurch gekennzeichnet, dass** eine in Kaskadenschaltung geschaltete Stromregler-Drehzahlreglereinheit (506,507) vorgesehen ist, und dass in dem ersten Betriebsmodus die Stellgröße des Stromreglers (506) konstant geschaltet wird und/oder in dem zweiten Betriebsmodus die Stellgröße des Drehzahlreglers (507) konstant geschaltet wird.

4. Verfahren nach einem der Ansprüche 1 bis 3, **dadurch gekennzeichnet, dass** die Bestimmung des Kupplungspunktes von der Steuervorrichtung im Stillstand des Kraftfahrzeuges durchgeführt wird.

5. Verfahren nach Anspruch 1, **dadurch gekennzeichnet, dass** aus den erfassten von der Drehwinkelstellung abhängigen Werten der Motordrehzahl und/oder des Motorstromes der Kupplungspunkt durch Regression ermittelt wird.

6. Verfahren nach Anspruch 5, **dadurch gekennzeichnet, dass** zwei Regressionsbereiche (801,802) vorgegeben sind, von denen ein erster Regressionsbereich (801) im Leerweg des Stellmechanismus liegt und ein zweiter Regressionsbereich (802) im Stelllastbereich des Stellmechanismus liegt, in dem der Stellmechanismus gegen das von der Kupplung erzeugten Stelllastmoment angetrieben wird, und dass der Kupplungspunkt als Schnittpunkt der beiden aufgefundenen Regressionsgeraden ermittelt wird.

7. System zur Bestimmung des Kupplungspunktes einer mittels einer Stellvorrichtung betätigbaren Kupplung (MSK) eines Kraftfahrzeuges, insbesondere einer in einem Verteilergetriebe eines Kraftfahrzeuges mit Allradantrieb angeordneten Kupplung, welche Stellvorrichtung einen mittels einer Steuervorrichtung (508) elektrisch antreibbaren Stellmotor (GM) aufweist, der ausgangsseitig ein Motordrehmoment und eine Motordrehzahl bereitstellt und in Wirkverbindung mit einem die Kupplung (MSK) betätigenden Stellmechanismus (102,103, 104) steht, wobei die Drehwinkelstellung an der Motorausgangsseite oder eine daraus abgeleitete Größe erfasst wird, **dadurch gekennzeichnet, dass** zur Bestimmung des Kupplungspunktes der Stellmotor (GM) von der Steuervorrichtung (508) willkürlich derart betätigt wird, dass die Kupplung (MSK) eingerückt wird und dass bei Erreichen einer vorgebbaren Drehwinkelstellung (s1) des Stellmotors oder der daraus abgeleiteten Größe
- in einem ersten Betriebsmodus der Stellmotor (GM) von der Steuervorrichtung mit einer konstanten Spannung beaufschlagt wird und gleichzeitig die Motordrehzahl in Abhängigkeit von der Drehwinkelstellung und insbesondere zusätzlich der Motorstrom in Abhängigkeit von der Drehwinkelstellung erfasst wird
- und/oder in einem zweiten Betriebsmodus der Stellmotor (GM) von der Steuervorrichtung mit einem konstanten Strom beaufschlagt wird und die Motordrehzahl in Abhängigkeit von der Drehwinkelstellung erfasst wird,
und dass aus den erfassten, von der Drehwinkelstellung abhängigen Werten der Motordrehzahl und insbesondere zusätzlich aus den erfassten, von der Drehwinkelstellung abhängigen Werten des Motorstromes der Kupplungspunkt ermittelt wird.

8. System nach Anspruch 7, **dadurch gekennzeichnet, dass** eine in Kaskadenschaltung geschaltete Stromregler-Drehzahlreglereinheit (506,507) vorgesehen ist, und dass in dem ersten Betriebsmodus die Stellgröße des Stromreglers (506) konstant geschaltet wird und/oder in dem zweiten Betriebsmodus die Stellgröße des Drehzahlreglers (507) konstant geschaltet wird.

9. System nach Anspruch 7, **dadurch gekennzeichnet, dass** die Bestimmung des Kupplungspunktes von der Steuervorrichtung im Stillstand des Kraftfahrzeuges durchgeführt wird.

## Claims

1. Method for determining the point of engagement of a clutch (MSK) which can be actuated by means of an actuating device, in particular a clutch which is arranged in a power divider of a motor vehicle with all-wheel drive, which actuating device has a servomotor (GM) which can be driven electrically by means of a control device (508) and which makes available at the output end a motor torque and a motor speed and is operatively connected to an actuating mechanism (102, 103, 104) which actuates the clutch (MSK), the rotational angle position at the motor output end or any variable derived therefrom being sensed, **characterized in that**, in order to determine the point of engagement, the servomotor (GM) is actuated arbitrarily by the control device (508) in such a way that the clutch (MSK) is engaged, and **in that**, when a predefinable rotational angle position (s1) of the servomotor or the variable derived therefrom is reached,
- in a first operating mode, a constant voltage is applied to the servomotor (GM) by the control device and at the same time the motor speed is sensed as a function of the rotational angle position and in particular in addition the motor current is sensed as a function of the rotational angle position,
- and/or in a second operating mode, a constant current is applied to the servomotor (GM) by the control device and the motor speed is sensed as a function of the rotational angle position,
and **in that** the point of engagement is determined from the sensed values of the motor speed which are dependent on the rotational angle position, and in particular additionally from the sensed values of the motor current which are dependent on the rotational angle position.

2. Method according to Claim 1, **characterized in that** the servomotor is actuated with rotational speed control until the predefinable rotational angle position (s1) of the servomotor (GM) or the variable derived therefrom is reached.

3. Method according to Claim 1 or 2, **characterized in that** a current controller/rotational-speed controller unit (506, 507) is provided in a cascade circuit, and **in that**, in the first operating mode, the manipulated variable of the current controller (506) is switched to a constant value and/or, in the second operating mode, the manipulated variable of the rotational-speed controller (507) is switched to a constant value.

4. Method according to one of Claims 1 to 3, **characterized in that** the point of engagement of the control device is determined in the stationary state of the motor vehicle.

5. Method according to Claim 1, **characterized in that** the point of engagement is determined by regression from the sensed values, dependent on the rotational angle position, of the motor speed and/or the motor current.

6. Method according to Claim 5, **characterized in that** two regression ranges (801, 802) are predefined, the first regression range (801) of which lies in the idle travel of the actuating mechanism, and a second regression range (802) of which lies in the actuating load range of the actuating mechanism in which the actuating mechanism is driven counter to the actuating load torque generated by the clutch, and **in that** the point of engagement is determined as a point of intersection between the two regression lines which are found.

7. System for determining the point of engagement of a clutch (MSK) of a motor vehicle which can be actuated by means of an actuating device, in particular a clutch which is arranged in a power divider of a motor vehicle with all-wheel drive, which actuating device has a servomotor (GM) which can be driven electrically by means of a control device (508) and which makes available at the output end a motor torque and a motor speed and is operatively connected to an actuating mechanism (102, 103, 104) which actuates the clutch (MSK), the rotational angle position at the motor output end or any variable derived therefrom being sensed, **characterized in that**, in order to determine the point of engagement, the servomotor (GM) is actuated arbitrarily by the control device (508) in such a way that the clutch (MSK) is engaged, and **in that**, when a predefinable rotational angle position (s1) of the servomotor or the variable derived therefrom is reached,
- in a first operating mode, a constant voltage is applied to the servomotor (GM) by the control device and at the same time the motor speed is sensed as a function of the rotational angle position and in particular in addition the motor current is sensed as a function of the rotational angle position,
- and/or in a second operating mode, a constant current is applied to the servomotor (GM) by the control device and the motor speed is sensed as a function of the rotational angle position,
and **in that** the point of engagement is determined from the sensed values of the motor speed which are dependent on the rotational angle position, and in particular additionally from the sensed values of the motor current which are dependent on the rotational angle position.

8. System according to Claim 7, **characterized in that** a current controller/rotational-speed controller unit (506, 507) is provided in a cascade circuit, and **in that**, in the first operating mode, the manipulated variable of the current controller (506) is switched to a constant value and/or, in the second operating mode, the manipulated variable of the rotational-speed controller (507) is switched to a constant value.

9. System according to Claim 7, **characterized in that** the point of engagement of the control device is determined in the stationary state of the motor vehicle.

## Revendications

1. Procédé de détermination du point d'embrayage d'un embrayage (MSK) actionné par un dispositif de réglage, en particulier d'un embrayage d'une boîte de transfert d'un véhicule automobile à transmission intégrale, le dispositif de réglage présentant un servomoteur (GM) électrique muni d'un dispositif de commande (508), qui fournit côté sortie un couple de rotation du moteur et une vitesse de rotation du moteur et coopère avec un mécanisme de réglage (102, 103, 104) actionnant l'embrayage, la position de l'angle de rotation ou une grandeur qui en est déduite, étant saisie côté sortie du moteur,
**caractérisé en ce que**
pour déterminer le point d'embrayage, le servomoteur (GM) est actionné arbitrairement par le dispositif de commande (508) pour embrayer l'embrayage (MSK) et, lorsqu'une position de l'angle de rotation (s1) du servomoteur ou la grandeur correspondante est atteinte :
- dans un premier mode de fonctionnement, le servomoteur (GM) est alimenté par le dispositif de commande avec une tension constante, et simultanément la vitesse de rotation du moteur est saisie en fonction de la position de l'angle de rotation et également en particulier le courant du moteur en fonction de la position de l'angle de rotation,
- et/ou dans un deuxième mode de fonctionnement, le servomoteur (GM) est alimenté par le dispositif de commande avec un courant constant et la vitesse de rotation du moteur est saisie en fonction de la position de l'angle de rotation,
le point d'embrayage étant déterminé à partir des valeurs de la vitesse de rotation du moteur saisies en fonction de la position de l'angle de rotation et également en particulier à partir des valeurs du courant du moteur saisies en fonction de la position de l'angle de rotation.

2. Procédé selon la revendication 1,
**caractérisé en ce que**
le servomoteur (GM) est commandé par le réglage de la vitesse pour atteindre la position de l'angle de rotation (s1) ou la grandeur qui en est déduite.

3. Procédé selon la revendication 1 ou 2,
**caractérisé en ce qu'**
une unité de régulation de courant/de vitesse (506, 507) est montée en cascade, et dans le premier mode de fonctionnement, la grandeur de réglage du régulateur de courant (506) est commutée de manière constante et/ou dans le deuxième mode de fonctionnement, la grandeur de réglage du régulateur de vitesse (507) est commutée de manière constante.

4. Procédé selon l'une des revendications 1 à 3,
**caractérisé en ce que**
le dispositif de commande à l'arrêt du véhicule automobile effectue la détermination du point d'embrayage.

5. Procédé selon la revendication 1,
**caractérisé en ce que**
le point d'embrayage est déterminé par régression à partir des valeurs de la vitesse de rotation du moteur et/ou du courant de moteur saisies en fonction de la position de l'angle de rotation.

6. Procédé selon la revendication 5,
**caractérisé en ce que**
deux plages de régression (801, 802) sont prédéfinies, dont une première plage de régression (801) se situant dans la course à vide du mécanisme de réglage et une deuxième plage de régression (802) dans la zone de charge de réglage du mécanisme de réglage, le mécanisme de réglage étant entraîné à l'encontre du couple de charge de réglage généré par l'embrayage, et le point d'embrayage étant déterminé comme point d'intersection des deux droites de régression trouvées.

7. Système de détermination du point d'embrayage d'un embrayage (MSK) actionné par un dispositif de réglage d'un véhicule automobile, en particulier d'un embrayage disposé dans une boîte de transfert d'un véhicule automobile à transmission intégrale, le dispositif de réglage présentant un servomoteur (GM) entraîné électriquement au moyen d'un dispositif de commande (508), qui fournit côté sortie un couple de rotation du moteur et une vitesse de rotation du moteur, et est en liaison active avec un mécanisme de réglage (102, 103, 104) actionnant l'embrayage, la position de l'angle de rotation ou une grandeur qui en est déduite, étant saisie côté sortie du moteur,
**caractérisé en ce que**
pour déterminer le point d'embrayage le servomoteur (GM) est actionné arbitrairement par le dispositif de commande (508), pour embrayer l'embrayage (MSK) et lorsqu'une position de l'angle de rotation (s1) du servomoteur ou la grandeur qui en est déduite est atteinte
- dans un premier mode de fonctionnement, le servomoteur (GM) est alimenté par le dispositif de commande avec une tension constante et simultanément la vitesse de rotation du moteur est saisie en fonction de la position de l'angle de rotation, et également en particulier le courant du moteur en fonction de la position de l'angle de rotation,
- et/ou dans un deuxième mode de fonctionnement, le servomoteur (GM) est alimenté par le dispositif de commande avec un courant constant et la vitesse de rotation du moteur est saisie en fonction de la position de l'angle de rotation,
le point d'embrayage étant déterminé à partir des valeurs de la vitesse de rotation du moteur saisies en fonction de la position de l'angle de rotation et également en particulier à partir des valeurs du courant du moteur saisies en fonction de la position de l'angle de rotation.

8. Système selon la revendication 7,
**caractérisé en ce qu'**
une unité de régulation de courant/de vitesse (506, 507) est montée en cascade, et dans le premier mode de fonctionnement, la grandeur de réglage du régulateur de courant (506) est commutée de manière constante et/ou dans le deuxième mode de fonctionnement, la grandeur de réglage du régulateur de vitesse (507) est commutée de manière constante.

9. Système selon la revendication 7,
**caractérisé en ce que**
le dispositif de commande effectue à l'arrêt du véhicule automobile la détermination du point d'embrayage.
